# EUROPÄISCHE PATENTANMELDUNG

(11) **EP 2 127 793 A1**
(43) Veröffentlichungstag der Anmeldung: **02.12.2009**
(21) Anmeldenummer: 08009796.7
(22) Anmeldetag: 29.05.2008
(51) Int. Cl.: B23C 5/22, B23C 5/08, B23D 61/06

(54) **Schneidelement und Fräswerkzeug**

(71) Anmelder: Linsinger Maschinenbau Gesellschaft m.b.H., 4662 Steyrermühl (AT)
(72) Erfinder: Knoll, Johann, 4861 Schörfling (AT)
(74) Vertreter: Pausch, Thomas Ernst

(57) **Zusammenfassung**

Die Erfindung bettrifft ein auswechselbares Schneidelement (1) für ein Fräswerkzeug.(2), insbesondere für ein Scheibenfräserwerkzeug, zum Fräsen bzw. Sägen von Metallrohlingen, wie insbesondere Metallrohre oder Metallknüppel, mit einer im wesentlichen prismatischen oder quaderförmigen Grundform, mit wenigstens einer Schneide (3), und mit wenigstens einer Durchtrittsbohrung (4) zur Aufnahme eines Befestigungsmittels (5), wobei an wenigstens einer der dem Scheibenfräserwerkzeug zugewandten Flächen des Schneidelementes (1) eine bezüglich wenigstens einer der drei Schneidelementsmittelebenen nichtsymmetrisch ausgeführte Abstufung (6) vorgesehen, bzw. ausgeformt ist, weiters betrifft die Erfindung ein Fräswerkzeug (2).

## Beschreibung

Die Erfindung betrifft ein auswechselbares Schneidelement für ein Fräswerkzeug und ein Fräswerkzeug, insbesondere ein Scheibenfräserwerkzeug, zum Fräsen bzw. Sägen von Metallrohlingen wie insbesondere Metallrohre oder Metallknüppel.

Ein derartiges Schneidelement ist aus der AT 008 436 U1 desselben Patentanmelders bekannt. Eine lösbare Verbindung der Schneidelemente mittels Schrauben, insbesondere Senkschrauben am Umfangsbereich des Grundkörpers in im wesentlichen radialer Richtung an Stelle der bislang bekannten Löt- oder Klemmverbindungen ermöglicht den Einsatz beliebiger Schneidengeometrien, und damit einen erweiterten Anwendungsbereich, z.B. Sägen auch von rostfreien Stählen. Es sind höhere Standzeiten möglich, denn etwa bei vorzeitigem Ausbruch einer Schneide muss nur ein Schneidelement gewechselt werden. Ausserdem werden durch diese besonderen konstruktiven Maßnahmen an den erfindungsgemäßen Werkzeugen die bislang erkennbare Neigung von Scheibenfräsern zu schädlichen Vibrationen wirksam vermindert bzw. gedämpft. Die Schraubenbefestigung nach der Erfindung ist grundsätzlich robuster als z. B. die bislang verwendete Selbstklemmung von Wendeplatten oder die'Befestigung mittels quer zur Scheibenebene verlaufenden Befestigungsschrauben. Von Nachteil ist jedoch, dass es bei dieser Werkzeugausführung möglich ist das Schneidelement verkehrt zu befestigen, was zu Problemen im Betrieb führen kann.

Ausgehend vom Stand der Technik gemäß der AT 008 436 U1 liegt der Erfindung die Aufgabe zugrunde, ein Werkzeug zur spanenden Bearbeitung der gattungsgemäßen Art, insbesondere für Fräsverfahren mit hohen Vorschubgeschwindigkeiten, zur Verfügung zu stellen, welches gegenüber den vorbekannten Werkzeugen eine verbesserte Anwendungssicherheit ermöglicht.

Diese Aufgabe wird durch das im Anspruch 1 angegebene Schneidelement und das im Anspruch 7 angegebene Fräswerkzeug gelöst.

Erfindungsgemäß handelt es sich hierbei um ein auswechselbares Schneidelement für ein Fräswerkzeug, insbesondere für ein Scheibenfräserwerkzeug, zum Fräsen bzw. Sägen von Metallrohlingen, wie insbesondere Metallrohre oder Metallknüppel, mit einer im wesentlichen prismatischen oder quaderförmigen Grundform und mit wenigstens einer Schneide, und mit wenigstens einer Durchtrittsbohrung zur Aufnahme eines Befestigungsmittels, wobei an wenigstens einer der dem Scheibenfräserwerkzeug zugewandten Flächen des Schneidelementes eine bezüglich wenigstens einer der drei Schneidelementsmittelebenen nichtsymmetrisch ausgeführte Abstufung vorgesehen, bzw. ausgeformt ist.

Das erfindungsgemäße Schneidelement mit der Abstufung ist in einen an Form und Abmessungen der Abstufung entsprechenden Ausschnitt an einem Schneidelementsitz des Fräswerkzeuges einsetzbar. Diese konstruktive Maßnahme ermöglicht eine eindeutige Positionierung des Schneidelementes im Schneidelementsitz, wodurch ein fehlerhaftes Befestigen des Elementes gänzlich vermieden werden kann. Überdies ist durch diese Maßnahme sichergestellt, dass für den Betrieb des Fräswerkzeuges stets der richtige Typ von Schneidelementen zum Einsatz kommt. Dadurch kann eine beanspruchungsgerechtere Verwendung des Werkzeuges gewährt werden. Eine lösbare Verbindung des erfindungsgemäßen Schneidelementes am Fräswerkzeug ermöglicht einen raschen Austausch bei Verschleiß oder gar Versagen des Schneidelementes.

Eine bevorzugte Ausbildung der Erfindung sieht vor, dass das Schneidelement über zwei oder mehrere Schneidkanten verfügt, es kann somit bei Verschleiß gewendet und weiterbenutzt werden. Dies erfordert eine Symmetrie des Schneidelementes bezüglich wenigstens einer Mittelebene, was auch in der Gestaltung der Abstufung am Schneidelement und des korrespondierenden Ausschnitts am Fräswerkzeug berücksichtigt wird.

Eine weitere denkbare Variante der Erfindung sieht die Platzierung der Abstufung am Fräswerkzeug vor und nicht am Schneidelement. Das Schneidelement ist dafür mit dem korrespondierenden Ausschnitt versehen.

In einer bevorzugten konstruktiven Ausgestaltung kann das Schneidelement eine untere und/oder eine stirnseitige Anlagefläche aufweisen, die mit der Schneidelementsitz des Fräswerkzeuges in gegenseitigem Kontakt steht, wobei das Schneidelement und der Schneidelementsitz an ihren gegenseitigen Anlageflächen formschlüssig ausgeführt sind. Dies sorgt für eine günstige Übertragung der Schnittkräfte. Die Abstufung am Schneidelement und der entsprechende Ausschnitt am Schneidelementsitz des Fräswerkzeuges können ebenfalls dergestalt formschlüssig'ausgeformt sein, dass eine sichere Abstützung des Schneidelementes und eine optimale Übertragung der Schnittkräfte gewährleistet ist.

Dem Prinzip der Erfindung folgend ist von Vorteil weiterhin vorgesehen, dass die Befestigung der Schneidelemente am Randbereich des vorzugsweise scheibenförmigen Grundkörpers des Freäswerkzeuges vermittels der Befestigungsschrauben in tangentialer Richtung bezüglich der Umfangsrichtung der Grundkörperscheibe erfolgt, d.h. die Schneide bzw. die der Schneide zugeordnete obere Schneidfläche ist im wesentlichen in tangentialer Richtung am Randbereich des scheibenförmigen Grundkörpers angeordnet. Durch diese tangentiale Schneidelementanordnung ergibt ergibt sich eine höchstmögliche Stabilität gegenüber Vibrationen, selbst bei höheren Spanstärken der zu bearbeitenden Werkstücke. Die Schraubenbefestigung nach der Erfindung ist grundsätzlich robuster als z. B. die bislang verwendete Selbstklemmung von Wendeplatten oder die Befestigung mittels quer zur Scheibenebene verlaufenden Befestigungsschrauben. Hierbei ist es insbesondere bei Fräs- und bei Sägewerkzeugen vorteilhaft, um z. B. die volle Bewegungsbahn eines Fräskopfes oder Sägekopfes möglichst dicht über der Werkstückoberfläche ausnutzen zu können, das Schneidelement beispielsweise mit Hilfe einer Senkschraube in den vorgenannten Sitzen, die entsprechende Auflage- bzw. Anlageflächen für die Aufnahme der Schnittkräfte aufweisen, zu befestigen. Eine lösbare Verbindung der Schneidelemente mittels Schrauben, insbesondere Senkschrauben am Umfangsbereich des Fräswerkzeuges in vorzugsweise radialer Richtung ermöglicht den Einsatz beliebiger Schneidengeometrien, und damit einen deutlich größeren Anwendungsbereich, z.B. Sägen auch von rostfreien Stählen. Es sind höhere Standzeiten möglich, denn etwa bei vorzeitigem Ausbruch einer Schneide muss nur ein Schneidelement gewechselt werden. Außerdem werden durch diese besonderen konstruktiven Maßnahmen an den erfindungsgemäßen Werkzeugen die bislang erkennbare Neigung von Scheibenfräsern zu schädlichen Vibrationen wirksam vermindert bzw. gedämpft. Bei einer besonders bevorzugten Ausführung der Erfindung ist das Werkzeug als Scheibenfräser ausgeführt, und insbesondere als Scheibenfräser zum Sägen mit unterschiedlichen Schneidformen der Schneidelemente ausgebildet.

Darüber hinaus kann zumindest ein Schneidelementtyp einen Spanteiler aufweisen, der z. B. durch eine in Umlaufrichtung des Fräswerkzeugs verlaufende Spanteilernut ausgebildet ist. Vorzugsweise ist die in bzw. auf der Schneidflächenebene ausgebildete Spanteilernut aussermittig versetzt angeordnet, und zwar in zwei unterschiedlichen Versetzungsrichtungen, wobei die am Grundkörper aufeinanderfolgend befestigten Schneidelemente wechselweise eine in der einen und in der anderen Versetzungsrichtung angeordnete Spanteilernuten aufweisen, wodurch ein ruhigerer Werkzeuglauf mit verringerter Vibration erreicht werden kann.

Bei einer bevorzugten Ausbildung der Erfindung, bei der auch eine besonders gute seitliche Stabilisierung des Schneidelementes im Schneidelementsitz erreicht wird, ist vorgesehen, dass am Randbereich des scheibenförmigen Grundkörpers ein im wesentlichen L-förmig ausgesparter Sitz im Grundkörper des Werkzeuges mit einer den einen Schenkel des L-förmigen Sitzes bildenden Sitzauflagefläche und mit einer den anderen Schenkel des L-förmigen Sitzes bildenden Sitzanlagefläche zur Aufnahme der auf die eine im wesentlichen prismatische oder quaderförmige Grundform aufweisenden Schneidelemente wirkenden Schnittkräfte ausgebildet ist. Hierbei kann das Schneidelement in bevorzugter kontruktiver Ausbildung eine untere und/oder eine stirnseitige Anlagefläche aufweisen, die mit der Sitzauflagefläche und/oder mit der Sitzanlagefläche des L-förmigen Sitzes in gegenseitigem Kontakt stehen, wobei das Schneidelement und der L-förmige Sitz an ihren gegenseitigen Anlageflächen formschlüssig ausgeführt sind.

Das Fräswerkzeug ist in bevorzugter Ausgestaltung am Schneidelementsitz mit einem an Form und Abmessungen der Abstufung des Schneidelementes angepassten Ausschnitt versehen für eine eindeutige Befestigung des Schneidelementes am Fräswerkzeug.

Die Breite wenigstens eines Teiles des Schneidelementes überragt in bevorzugter Ausbildung die Dicke des scheibenförmigen Grundkörpers des Fräswerkzeug. Dies verringert die Gefahr eines eventuellen Klemmens des Werkzeuges im Betrieb und erhöht somit die Lebensdauer. Alternativ dazu oder auch zusätzlich kann eine Schränkung der Schneidelemente am Fräswerkzeug erfolgen, d.h. die Schneidelemente sind in Schnittrichtung abwechselnd nach links und rechts versetzt oder verdreht.

Im Randbereich des Fräswerkzeuges kann in einer bevorzugten Weiterbildung der Erfindung ein Spanraum vorhanden sein, der durch eine runde Aussparung gebildet wird, die an den Schneidelementsitz anschließt, in Bewegungsrichtung gesehen nach dem Schneidelement.

Der Durchmesser des Fräswerkzeuges kann je nach Einsatzzweck zwischen 800 mm und 2400 mm liegen, wodurch ein breites Anwendungsgebiet erschlossen wird. So kann beispilesweise ein Sägen großer Rohlinge effizient und wirtschaftlich erfolgen.

Der scheibenförmige Grundkörper des Fräswerkzeuges kann in einer bevorzugten Ausgestaltungsvariante mit Aussparungen versehen sein. Weiters kann die Dicke des Grundkörpers in radialer Richtung wenigstens abschnittsweise verringert sein, wobei auch stegförmige Bereiche mit gleichbleibender Dicke vorhanden sein können. Durch diese Maßnahmen ist, insbesondere bei großem Werkzeugdurchmesser, eine Reduktion der Masse erzielbar, überdies läßt sich eine Erhöhung der Steifigkeit des Werkzeuges bewerkstelligen.

Weitere Vorteile, Zweckmäßigkeiten und Weiterbildungen der Erfindung ergeben sich aus den weiteren Unteransprüchen.

Weitere Einzelheiten ergeben sich aus der nachfolgenden Beschreibung eines Ausführungsbeispieles anhand der Zeichnungen. Es zeigt:
- Fig. 1: Ein Ausführungsbeispiel eines erfindungsgemäßen Schneidelementes in Vorder-, Drauf- und Seitenansicht;
- Fig. 2: Vier perspektivische Ansichten eines Schneidelementes mit Spanteilernut nach einem Ausführungsbeispiel der Erfindung;
- Fig. 3: Ausschnitt eines Fräswerkzeuges mit eingesetztem erfindungsgemäßen Schneidelement nach einem Ausführungsbeispiel der Erfindung Vorder- und Draufsicht, mit einer Schnittdarstellung in der Seitenansicht; und
- Fig. 4: Zwei perspektivische Ansichten eines Ausschnitts eines Fräswerkzeuges mit erfindungsgemäßen Schneidelement nach einem Ausführungsbeispiel der Erfindung, in montierter und in zerlegter Darstellung.

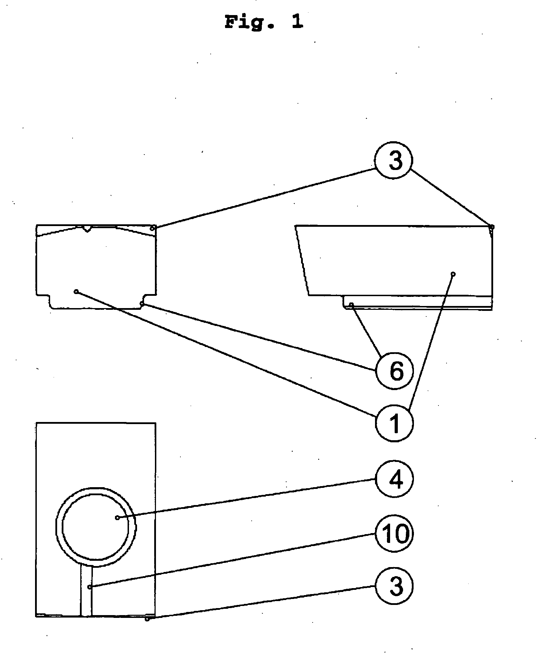

Das in Figur 1 dargestellte bevorzugte Ausführungsbeispiel der Erfindung umfasst ein Schneidelement 1 zur spanenden Bearbeitung, insbesondere für Fräs- und/oder Sägeverfahren mit hohen Vorschubgeschwindigkeiten, mit einer im wesentlichen prismatischen oder quaderförmigen Grundform, mit einer Schneide 3, und mit einer Durchtrittsbohrung 4 zur Aufnahme einer Senkkopfschraube 5. An der Unterseite des Schneidelementes 1 ist eine Abstufung 6 vorhanden, die sich nicht über die gesamte Länge des Schneidelementes 1 erstreckt. An der dem Werkstück zugewandten Seite des Schneidelementes 1 ist eine in Umfangsrichtung des Fräswerkzeuges 2 verlaufende Spanteilernut 10 ausgebildet. Vorzugsweise ist die in bzw. auf der oberen Schneidflächenebene ausgebildete Spanteilernut 10 aussermittig versetzt angeordnet, wodurch ein weiterhin ruhigerer Werkzeuglauf mit verringerter Vibration erreicht werden kann.

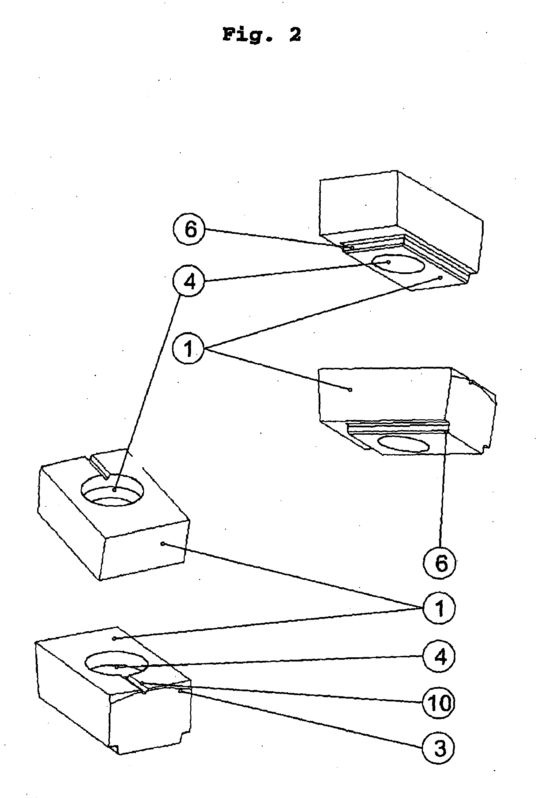

Figur 2 zeigt das Schneidelement 1 aus Figur 1, jedoch in perspektivischen Ansichten zwecks besserer Anschaulichkeit.

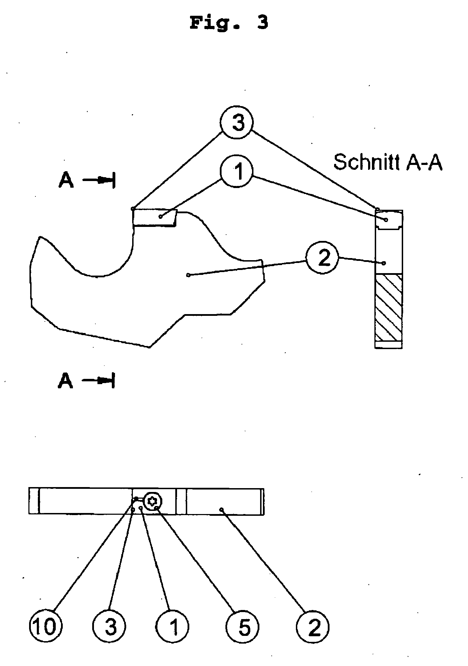

Figur 3 zeigt einen Ausschnitt eines Fräswerkzeuges 2 mit eingesetztem erfindungsgemäßen Schneidelement 1 nach einem Ausführungsbeispiel der Erfindung in Vorder- und Draufsicht, mit einer Schnittdarstellung in der Seitenansicht.

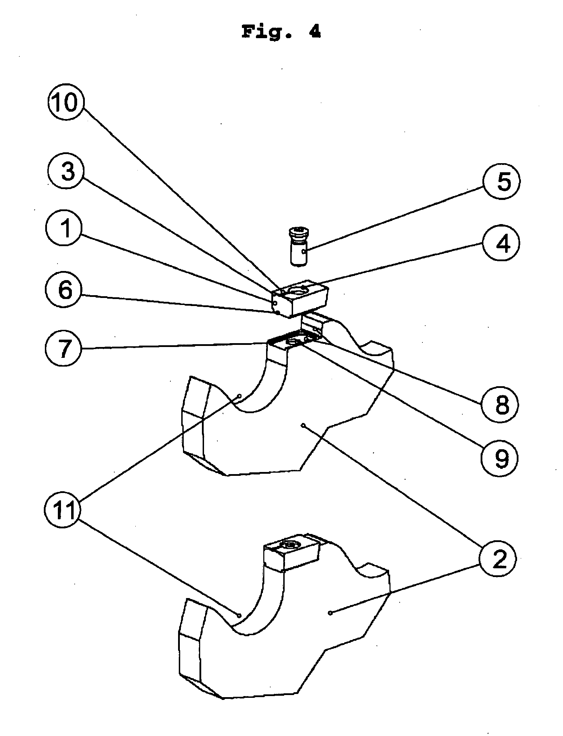

Figur 4 zeigt zwei perspektivische Ansichten eines Ausschnitts eines Fräswerkzeuges 2 mit erfindungsgemäßem Schneidelement 1 nach einem Ausführungsbeispiel der Erfindung, in montierter und in zerlegter Darstellung. Das Schneidelement 1 weist wenigstens eine Durchtrittsbohrung 4 zur Aufnahme des Befestigungsmittels 5 auf, wobei das Befestigungsmittel 5 bei allen Ausführungsbeispielen durch eine Befestigungsschraube ausgebildet ist, welche in eine am Randbereich des Fräswerkzeuges 2 angeordnete Gewindebohrung 9 eingreift. Am Randbereich des Fräswerkzeuges 2 ist ein im wesentlichen L-förmig ausgesparter Schneidelementsitz 8 im Werkzeug 2 mit einer den einen Schenkel des L-förmigen Schneidelementsitzes 8 bildenden Sitzauflagefläche und mit einer den anderen Schenkel des L-förmigen Schneidelementsitzes 8 bildenden Sitzanlagefläche ausgebildet, zur Aufnahme der auf die Schneidelemente 1 wirkenden Schnittkräfte. Das Fräswerkzeug 2 ist am Schneidelementsitz 8 mit einem an Form und Abmessungen der Abstufung 6 des Schneidelementes 1 angepassten Ausschnitt 7 versehen für eine Befestigung des Schneidelementes 1 am Fräswerkzeug 2. Hierdurch wird eine besonders gute seitliche Stabilisierung des Schneidelementes 1 Schneidelementsitz 8 erreicht. Im Randbereich des Fräswerkzeuges 2 ist in Form einer runden Aussparung, die an Schneidelementsitz 8 anschließt, ein Spanraum 11 ausgebildet, in Bewegungsrichtung gesehen nach dem Schneidelement 1.

## Patentansprüche

1. Auswechselbares Schneidelement (1) für ein Fräswerkzeug (2), insbesondere für ein Scheibenfräserwerkzeug, zum Fräsen bzw. Sägen von Metallrohlingen, wie insbesondere Metallrohre oder Metallknüppel, mit einer im wesentlichen prismatischen oder quaderförmigen Grundform, mit wenigstens einer Schneide (3), und mit wenigstens einer Durchtrittsbohrung (4) zur Aufnahme eines Befestigungsmittels (5), **dadurch gekennzeichnet, dass** an wenigstens einer der dem Fräswerkzeug zugewandten Flächen des Schneidelementes (1) eine bezüglich wenigstens einer der drei Schneidelementsmittelebenen nichtsymmetrisch ausgeführte Abstufung (6) vorgesehen, bzw. ausgeformt ist.

2. Schneidelement nach Anspruch 1, **dadurch gekennzeichnet dass** für eine Befestigung des Schneidelementes (1) am Fräswerkzeug (2) das Schneidelement (1) mit der Abstufung (6) in einen an Form und Abmessungen der Abstufung angepassten Ausschnitt (7) an einem Schneidelementsitz (8) des Fräswerkzeuges (2) einsetzbar ist.

3. Schneidelement nach Anspruch 1 oder 2, **dadurch gekennzeichnet, dass** die Schneidelemente (1) kraftschlüssig oder formschlüssig mit den Schneidelementsitzen (8) in gegenseitigem Kontakt stehen bzw. wenigstens mit oder an den Schneidelementsitzen anliegen oder aufgenommen sind, sodass zumindest solche quer zur Scheibenebene auf die Schneidelemente (1) wirkenden Schnittkräfte von den jeweiligen Schneidelementsitzen (8) aufgenommen werden.

4. Schneidelement nach einem der vorhergehenden Ansprüche,
**dadurch gekennzeichnet dass** die Befestigung des Schneidelementes (1) am Fräswerkzeug (2) durch das Befestigungsmittel (5) erfolgt, welches eine Befestigungsschraube ist, die in eine im wesentlichen in radialer Richtung am Randbereich des, vorzugsweise scheibenförmigen, Fräswerkzeuges (2) angeordnete Gewindebohrung (9) eingreift.

5. Schneidelement nach einem der vorhergehenden Ansprüche,
**dadurch gekennzeichnet, das** es zum Sägen mit unterschiedlichen Formen der Schneidelemente (1) ausgebildet ist.

6. Schneidelement nach einem der vorhergehenden Ansprüche,
**dadurch gekennzeichnet, dass** ein Spanteiler vorhanden ist,
der im wesentlichen durch eine in Umlaufrichtung des Fräswerkzeugs (2) verlaufende Spanteilernut (10) ausgebildet ist.

7. Fräswerkzeug zur Aufnahme eines Schneidelementes (1) nach einem der Ansprüche 1 bis 6, **dadurch gekennzeichnet, dass** das Werkzeug einen scheibenförmigen Grundkörper aufweist, an bzw. auf dessen Randbereich wenigstens ein auswechselbares Schneidelement (1) angeordnet ist.

8. Fräswerkzeug nach Anspruch 7, **dadurch gekennzeichnet, dass** am Randbereich des scheibenförmigen Grundkörpers ein im wesentlichen L-förmig ausgesparter Schneidelementsitz (8) im Grundkörper des Fräswerkzeuges (2) mit einer den einen Schenkel des L-förmigen Sitzes bildenden Sitzauflagefläche und mit einer den anderen Schenkel des L-förmigen Sitzes bildenden Sitzanlagefläche zur Aufnahme der auf die Schneidelemente (1) wirkenden Schnittkräfte ausgebildet ist.

9. Fräswerkzeug nach Anspruch 7 oder 8, **dadurch gekennzeichnet dass** das Fräswerkzeug (2) am Schneidelementsitz (8) mit einem an Form und Abmessungen der Abstufung (6) des Schneidelementes (1) angepassten Ausschnitt (7)versehen ist für eine Befestigung des Schneidelementes (1) am Fräswerkzeug (2).

10. Fräswerkzeug nach einem der Ansprüche 7 bis 9, **dadurch gekennzeichnet, dass** das Schneidelement (1) dergestalt kraftschlüssig oder formschlüssig mit dem Schneidelementsitz (8) in gegenseitigem Kontakt steht bzw. wenigstens mit oder an dem Schneidelementsitz (8) anliegt oder aufgenommen ist, dass zumindest solche quer zur Scheibenebene auf das Schneidelement (1) wirkenden Schnittkräfte vom jeweiligen Schneidelementsitz (8) aufgenommen werden.
